# EUROPEAN PATENT SPECIFICATION

(11) **EP 3 638 478 B1**
(45) Date of publication and mention of the grant of the patent: **14.12.2022**
(21) Application number: 18794285.9
(22) Date of filing: 02.05.2018
(51) Int. Cl.: B29C 33/02, B29C 35/02, F03D 1/06, B29C 70/44, B29C 70/54, B29K 105/08, B29K 307/04, B29L 31/08

(54) **METHOD FOR MANUFACTURING WIND TURBINE ROTOR BLADE COMPONENTS USING DYNAMIC MOLD HEATING**
VERFAHREN ZUR HERSTELLUNG VON WINDTURBINENROTORBLATTKOMPONENTEN MIT DYNAMISCHER FORMERWÄRMUNG
PROCÉDÉ DE FABRICATION DE COMPOSANTS DE PALE DE ROTOR D'ÉOLIENNE À L'AIDE D'UN CHAUFFAGE DE MOULE DYNAMIQUE

(30) Priority: 04.05.2017 US 201715586786
(43) Date of publication of application: 22.04.2020
(73) Proprietor: General Electric Company, Schenectady, NY 12345 (US)
(72) Inventor: JOHNSON, Stephen Bertram, Greenville, SC 29615 (US); CHEN, Xu, Greenville, SC 29615 (US); ALTHOFF, Nicholas Keane, Greenville, SC 29615 (US)
(74) Representative: Zimmermann & Partner Patentanwälte mbB
(86) International application number: PCT/US2018/030576
(87) International publication number: WO 2018/204446

(56) References cited:
- KR-A- 20140 072 979
- US-A1- 2013 098 527
- US-A1- 2014 119 931
- US-A1- 2014 312 519
- US-A1- 2014 327 178
- US-A1- 2014 333 008
- US-A1- 2015 174 835
- US-A1- 2017 100 894

## Description

### FIELD

The present disclosure relates to a method for manufacturing wind turbine rotor blade components using dynamic mold heating for curing the composite material thereof.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy from the wind using known airfoil principles. The rotor blades transform the kinetic energy into a form of rotational energy so as to turn a shaft coupling the rotor blades to a gearbox, or if a gearbox is not used, directly to the generator. The generator then converts the mechanical energy to electrical energy that may be deployed to a utility grid.

Conventional wind turbine rotor blades include a body shell with various structural components configured therein to provide the desired stiffness and/or strength for supporting the loads imposed on the rotor blade during operation. For example, the structural components often include opposing spar caps configured on inner surfaces of the upper and lower shell members and a shear web mounted between the opposing spar caps.

To increase the structural strength of the rotor blade components, the body shell is typically formed in halves or other portions that extend along the entire length of the finished blade. Specialized molding and curing equipment is typically used to accommodate such blade components, which continue to increase in length as more power is desired from larger wind turbines. More specifically, large composite rotor blade components are generally manufactured using layup techniques that include arranging one or more layers of plies of reinforcing fiber material in large molds either by hand or by automated equipment Once the plies have been arranged in the mold, resin is supplied to the mold using a technique such as resin transfer molding (RTM), vacuum-assisted resin transfer molding (VARTM), or any other suitable infusion method. Alternatively, the plies may be pre-impregnated with a resin material, i.e. pre-preg.

In addition, the plies are generally subjected to a vacuum-assisted and temperature-controlled consolidation and curing process. For example, after the vacuum infusion of the resin is complete, the set point temperature for the mold is raised to a cure temperature. After the resin has finished an exothermic reaction, the set point temperature may be adjusted to a new final cure temperature, after which the component is left to set for a predetermined time period in order for component to completely cure.

Some current wind blade manufacturing techniques use molds that have a plurality of heating zones embedded with heating coils, the number of which varies depending on the type of mold. A mold heat control system is used to set the mold heating profile and adjust energy supplied to the heating zones based on the temperature measured at each heating zone. Each of the heating zones, however, is set to follow the same temperature profile part after part regardless of the local difference in the laminate schedules between zones, the variations in cure profile characteristics within each heating zone, and/or the impact of environmental conditions. Because of the large variation in laminate structure in large wind turbine composite parts, the rate of cure will vary greatly between zones. As such, conventional manufacturing methods for certain parameters result in some regions of the component obtaining a sufficient degree of cure (DOC) for demolding, while other regions are under cured. Therefore, a safety margin is built into the temperature profiles to ensure that the entire component is cured, which not only induces high processing cost and longer cycles, but also regional over cure. A method for manufacturing a rotor blade component of a wind turbine is known from document US 2014/327178 A1.

Thus, there is a need for a system and method for manufacturing wind turbine blade components that addresses the aforementioned issues. More specifically, there is a need for a system and method for manufacturing wind turbine rotor blade components that uses dynamic mold heating control for curing the components that takes into account the variations in the cure rate between the different zones of the mold.

### BRIEF DESCRIPTION

Aspects and advantages of the invention will be set forth in part in the following description, or may be obvious from the description, or may be learned through practice of the invention.

The present disclosure is directed to a method for manufacturing a rotor blade component of a wind turbine according to claim 1. The method includes providing a mold body that is divided into a plurality of mold zones. Each of the mold zones has at least one sensor associated therewith for sensing a temperature or degree-of-cure thereof. The method also includes providing a composite material schedule for each of the mold zones. Further, the method includes placing composite material onto the mold body according to the composite material schedule, Moreover, the method includes supplying a resin material to each mold zone of the mold body, In addition, the method includes implementing a cure cycle for the rotor blade component. More specifically, the cure cycle includes supplying heat to each of the mold zones, continuously receiving, via a controller, signals from the sensors from one or more of the mold zones, and dynamically controlling the supplied heat to each mold zone based on the received signals and the composite material schedule of each mold zone until the cure cycle is complete.

The step of dynamically controlling the supplied heat to each mold zone based on the received signals and the composite material schedule of each mold zone until the cure cycle is complete includes generating a unique temperature profile for each of the mold zones based on the composite material schedule and controlling the supplied heat to each mold zone based on the unique temperature profile provided thereto until the cure cycle is complete.

The method includes continuously optimizing the cure cycle during implementation via machine learning. The step of continuously optimizing the cure cycle during implementation via machine learning includes determining initial operating parameters for each of the mold zones, optimizing the initial operating parameters via computer simulation, and sending the optimized initial operating parameters to the controller to utilize in the cure cycle. More specifically, in certain embodiments, the initial operating parameters may include an initial set point, a ramp rate, a cure temperature, a final cure time, or another other parameter relating to the curing process.

In further embodiments, the method may include comparing the cure cycle against the computer simulation and optimizing the cure cycle based on differences between the cure cycle and the computer simulation. For example, in one embodiment, the method may include adjusting an initial set point, an initial ramp rate, an initial cure temperature, and/or a final cure time for each of the mold zones.

In another embodiment, the method may include optimizing the cure cycle based on one or more historical cure cycles. In additional embodiments, the method may include generating operating data during the cure cycle, storing the operating data, and utilizing the stored operating data to optimize subsequent cure cycles.

In several embodiments, the step of continuously receiving, via the controller, signals from the sensors may include receiving at least one of temperature signals or degree-of-cure signals from one or more of the mold zones or a group of the mold zones.

In particular embodiments, the step of dynamically controlling the supplied heat to each mold zone based on the received signals and the composite material schedule of each mold zone until the cure cycle is complete may include maintaining a uniform temperature profile along a length of the mold body.

The present disclosure is directed to a method, which is not encompassed by the wording of the claims but useful for understanding the invention, for curing a rotor blade component of a wind turbine formed using a mold body that is divided into a plurality of mold zones. In addition, a composite material schedule is provided for each of the mold zones. Further, each of the mold zones has at least one sensor associated therewith for sensing a temperature or degree-of-cure thereof. Thus, the method includes supplying heat to each of the mold zones containing a composite material placed according to the composite material schedule. Moreover, the method includes continuously receiving, via a controller, signals from the sensors from each mold zone. Thus, the method includes dynamically controlling the supplied heat to each mold zone based on the received signals and the composite material schedule of each mold zone until the cure cycle is complete. It should be understood that the method may further include any of the additional steps, features, and/or embodiments as described herein.

The present disclosure is directed to a mold assembly, which is not encompassed by the wording of the claims but useful for understanding the invention, for manufacturing a rotor blade component of a wind turbine. The mold assembly includes a mold body defining a surface configured to receive composite material for forming the rotor blade component according to a composite material schedule. The mold body is divided into a plurality of mold zones, each of which includes at least one heating/cooling element configured to heat or cool the rotor blade component at that mold zone. The mold assembly also includes a plurality of sensors configured with the mold body, with at least one of the plurality of sensors configured with each of the mold zones. In addition, the mold assembly includes a controller operatively coupled to the plurality of sensors. As such, the controller is configured to perform one or more operations, including but not limited to, receiving a temperature and/or degree-of-cure signal from each of the plurality of sensors from each mold zone, and dynamically controlling the heating/cooling elements of each mold zone based on the received signals and the composite material schedule of each mold zone until the cure cycle is complete. It should be understood that the method may further include any of the additional steps, features, and/or embodiments as described herein.

In one embodiment, the mold zones may be thermally isolated from one another. In another embodiment, the heating/cooling elements may include coils embedded in each mold zone, heated fluids, cooling fluids, or a temperature-controlled blanket. It should be understood that the mold assembly may further include any of the additional features and/or embodiments as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective view of one embodiment of a wind turbine rotor blade according to the present disclosure;
FIG. 3 illustrates a cross-sectional view of the rotor blade of FIG. 2 along 3-3;
FIG. 4 illustrates a flow diagram of one embodiment of a method for manufacturing a rotor blade component of a wind turbine according to the present disclosure;
FIG. 5 illustrates a top view of one embodiment of a mold assembly according to the present disclosure;
FIG. 6 illustrates a block diagram of one embodiment of a controller according to the present disclosure;
FIG. 7 illustrates a top view of one embodiment of a composite material schedule for the rotor blade component according to the present disclosure; and
FIG. 8 illustrates a flow diagram of one embodiment of a method for manufacturing a rotor blade component of a wind turbine according to the present disclosure, which is not encompassed by the wording of the claims but useful for understanding the invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to a method and mold assembly for manufacturing a rotor blade component of a wind turbine that eliminates issues associated with all mold zones of the mold being heated according to a fixed temperature profile. Rather, the method and mold assembly of the present disclosure involves constantly optimizing the temperature profiles of each mold zone via machine learning. For example, to establish optimal initial operating parameters for each mold zone, the cure cycle is first optimized for each mold zone using computer simulation based on the laminate schedule, e.g. composite molding simulation software such as the PAM/RTM software. The method includes developing one or more algorithms that run the computer simulation repetitively and adjusting the temperatures profile for each mold zones (i.e. within limits) to achieve the shortest overall cure cycle. For example, the method may include adjusting the initial set point, ramp rate, initial cure temperature, final cure, etc. for each mold zone.

After the initial operating parameters are determined, such parameters, along with the expected degree-of-cure (DOC) and the temperature profiles are provided to the mold curing controller. The controller then runs the cure cycle, but rather than running the cycle against a fixed temperature profile, the controller monitors the temperature of each mold zone (or a group of mold zones) and the performance of the cure against the simulation results. For example, in one embodiment, the rate of cure during the initial ramp up (where the laminate may be thick enough to produce a exothermic reaction which causes the temperature to run above the programmed temperature profile or thin enough (or insulated by core or prefabricated parts) where the controller cannot deliver enough energy to achieve the temperature profile) may be monitored. Though the initial computer simulation is configured to predict such variations, the controller is configured to determine any deviations between the simulation and actual operating parameters and attempt, through controlling each zone, to correct or improve the performance relative to the simulation. Such corrections may be achieved via the sensors associated with each mold zone as well as additional side thermocouples, imbedded thermocouples, and/or dielectric devices which can directly measure the DOC and/or the temperature of the mold.

The method may also include zone-by-zone optimization of subsequent cure cycles by collecting performance data and results of multiple cures to further optimize and improve the system performance. For example, additional variables may be considered and optimized such as ambient temperature, humidity, resin bulk storage temperatures, the time under vacuum, the vacuum level, resin batch variations, resin manufacturer variations, and/or any other operation variables. Thus, the controller of the present disclosure is configured to learn the impact of all of the possible variables, and take action to optimize the individual cure cycles.

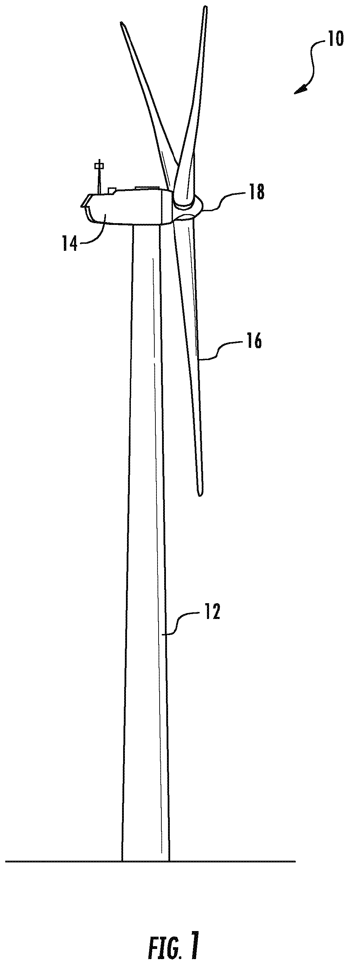

Referring now to the drawings, FIG. 1 illustrates perspective view of one embodiment of a wind turbine 10 according to the present disclosure. As shown, the wind turbine 10 includes a tower 12 with a nacelle 14 mounted thereon. A plurality of rotor blades 16 are mounted to a rotor hub 18, which is, in turn, connected to a main flange that turns a main rotor shaft. The wind turbine power generation and control components are housed within the nacelle 14. It should be appreciated that the wind turbine 10 of FIG. 1 is provided for illustrative purposes only to place the present invention in an exemplary field of use. Thus, one of ordinary skill in the art should understand that the invention is not limited to any particular type of wind turbine configuration.

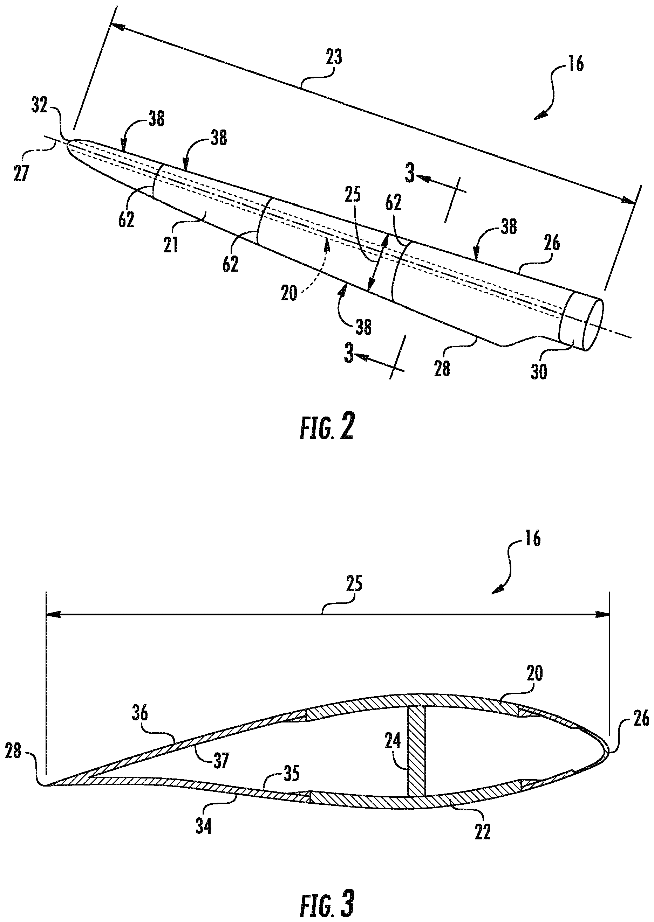

Referring now to FIGS. 2 and 3, one of the rotor blades 16 of FIG. 1 is illustrated according to the present disclosure In particular, FIG. 2 illustrates a perspective view of the rotor blade 16, whereas FIG. 3 illustrates a cross-sectional view of the rotor blade 16 along the sectional line 3-3 shown in FIG. 2. As shown, the rotor blade 16 generally includes a blade root 30 configured to be mounted or otherwise secured to the hub 18 (FIG. 1) of the wind turbine 10 and a blade tip 32 disposed opposite the blade root 30. A body shell 21 of the rotor blade generally extends between the blade root 30 and the blade tip 32 along a longitudinal axis 27. The body shell 21 may generally serve as the outer casing/covering of the rotor blade 16 and may define a substantially aerodynamic profile, such as by defining a symmetrical or cambered airfoil-shaped cross-section. The body shell 21 may also define a pressure side 34 and a suction side 36 extending between leading and trailing edges 26, 28 of the rotor blade 16. Further, the rotor blade 16 may also have a span 23 (FIG. 2) defining the total length between the blade root 30 and the blade tip 32 and a chord 25 (FIG. 3) defining the total length between the leading edge 26 and the trialing edge 28. As is generally understood, the chord 25 may generally vary in length with respect to the span 23 as the rotor blade 16 extends from the blade root 30 to the blade tip 32.

In several embodiments, the body shell 21 may be formed from a plurality of rotor blade segments 38. For example, as shown in FIG. 2, the body shell 21 may be formed from a plurality of blade segments 38 aligned in a span-wise end-to-end configuration. It should be understood that the rotor blade 16 may be formed from any suitable number of blade segments 38.

Additionally, the rotor blade segments 38 may generally be formed from any suitable material. For instance, in one embodiment, the body shell 21 may be formed entirely from a laminate composite material, such as a carbon fiber reinforced laminate composite or a glass fiber reinforced laminate composite. Alternatively, one or more portions of the body shell 21 may be configured as a layered construction and may include a core material, formed from a lightweight material such as wood (e.g., balsa), foam (e.g., extruded polystyrene foam) or a combination of such materials, disposed between layers of laminate composite material. In additional embodiments, the body shell 21 may be formed of any suitable composite material, including thermoplastic and/or thermoset materials.

Referring particularly to FIG. 3, the rotor blade 16 may also include one or more longitudinally extending structural components configured to provide increased stiffness, buckling resistance and/or strength to the rotor blade 16. For example, the rotor blade 16 may include a pair of longitudinally extending spar caps 20, 22 configured to be engaged against the opposing inner surfaces 35, 37 of the pressure and suction sides 34, 36 of the rotor blade 16, respectively. Additionally, one or more shear webs 24 may be disposed between the spar caps 20, 22 so as to form a beam-like configuration. The spar caps 20, 22 may generally be designed to control the bending stresses and/or other loads acting on the rotor blade 16 in a generally span-wise direction (a direction parallel to the span 23 of the rotor blade 16) during operation of a wind turbine 10. Similarly, the spar caps 20, 22 may also be designed to withstand the span-wise compression occurring during operation of the wind turbine 10.

The spar caps 20, 22 and the one or more shear webs 24 may be formed from any suitable material, including but not limited to laminate composite materials; such as a carbon fiber reinforced laminate composite or a glass fiber reinforced laminate composite. In addition, the spar caps 20, 22 may be formed via one or more pultrusions or pultruded members. As used herein, the terms "pultrusions," "pultruded members" or similar generally encompass reinforced materials (e.g. fibers or woven or braided strands) that are impregnated with a resin and pulled through a heated stationary die such that the resin cures or undergoes polymerization. As such, the process of manufacturing pultruded composites is typically characterized by a continuous process of composite materials that produces composite parts having a constant cross-section.

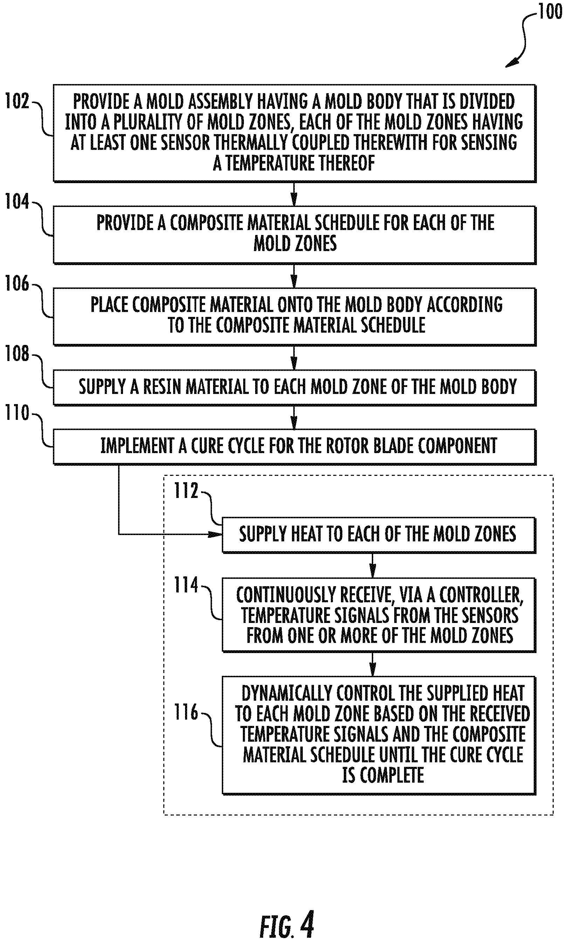

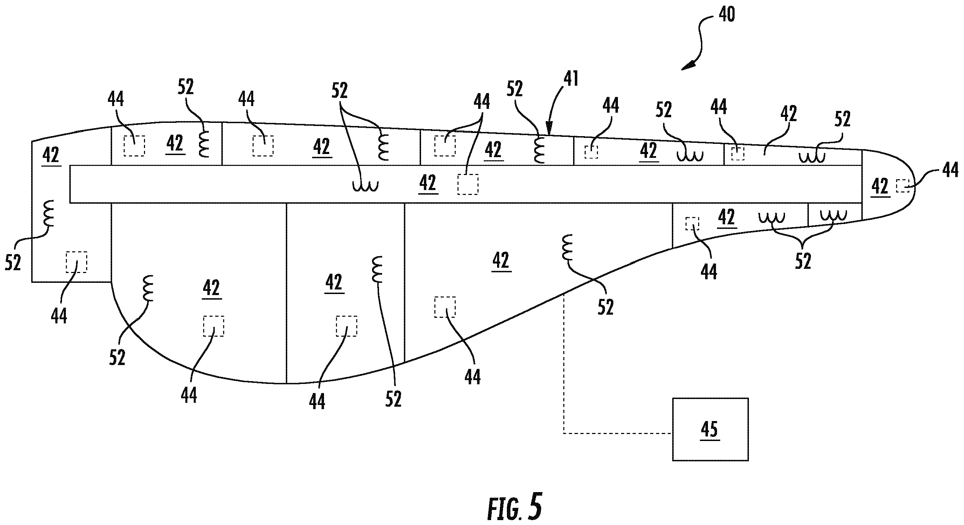

Referring now to FIG. 4, a flow diagram for a method 100 for manufacturing a rotor blade component of a wind turbine 10 using a computer-controller mold assembly 40 is illustrated. For example, in certain embodiments, the rotor blade components described herein may include any of the components illustrated in FIGS. 1-3, such as the body shell 21 (in parts or in whole), the spar caps 20, 22, or the shear webs 24. Further, as shown at 102, the method 100 includes providing the mold assembly 40 having a mold body 41 is divided into a plurality of mold zones 42 (FIG. 5). Further, in one embodiment, the mold zones 42 may be thermally isolated from one another. Thus, as shown in FIG. 5, each of the mold zones 42 has at least one sensor 44 associated therewith for sensing a temperature thereof. For example, in certain embodiments, the sensor(s) 44 may include a thermocouple.

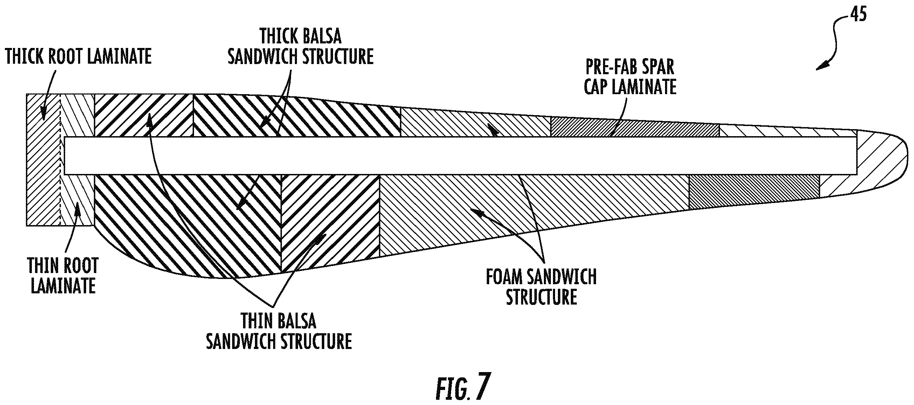

Thus, as shown at 104, the method 100 also includes providing a composite material schedule 50 for each of the mold zones 42. As described herein, a composite material schedule generally refers to an amount of composite material that is required in each zone 42. For example, as shown in the illustrated embodiment of FIG 7, the composite material schedule 50 provides the type and amount of composite material that should be placed within each mold zone to the component having the desired strength and/or rigidity. It should be understood that FIGS. 5 and 7 provide one example of the mold body 41, the mold zones 42, and the composite material schedule 50 and such details are provided for illustrative purposes only and are not meant to be limiting. Rather, one of ordinary skill in the art would recognize that the mold body 41, the mold zones 42, and the composite material schedule 50 may be adjusted for any rotor blade component being manufactured.

Thus, as shown at 106, the method 100 includes placing composite material onto the mold body 41 according to the composite material schedule 50. For example, as shown in FIG. 7, various materials having varying thicknesses may be placed in each mold zone 42 according to the composite material schedule 50. More specifically, as shown, the various illustrated composite materials include thin and thick root laminates, thin and thick balsa sandwich structures, various foam sandwich structures, and a pre-fab spar cap laminate. It should be understood that the composite material schedule 50 can vary depending on the rotor blade component being manufactured and FIG. 7 is provided for illustrative purposes only.

Referring back to FIG. 4, as shown at 108, the method 100 includes supplying a resin material to each mold zone 42 of the mold body 41. More specifically, in certain embodiments, the resin material may be supplied to the mold body 41 using resin transfer molding (RTM), vacuum-assisted resin transfer molding (VARTM), or any other suitable infusion method. Further, the resin material may include a thermoplastic material, a thermoset material, or any other suitable resin materials. In additional embodiments, any suitable resin material may be utilized to form the rotor blade components described herein. In addition, though the method 100 is described using a resin infusion cure process, those of ordinary skill in the art would recognize that the same principles can also be applied to optimize the cure of adhesives, e.g. used in bonding blade shells together.

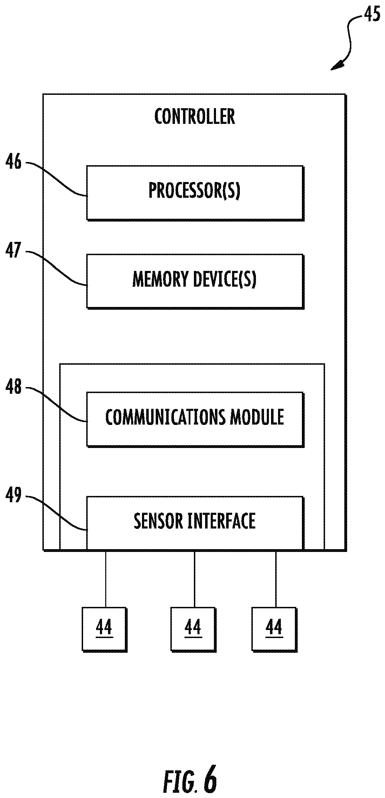

Referring still to FIG, 4, as shown at 110, the method 100 also includes implementing a cure cycle for the rotor blade component, e.g. via a controller 45. For example, as shown in FIG. 6, a block diagram of one embodiment of a controller 45 according to the present disclosure is illustrated. As shown, controller 45 may include one or more processor(s) 46 and associated memory device(s) 47 configured to perform a variety of computer-implemented functions (e.g., performing the methods, steps, calculations and the like and storing relevant data as disclosed herein). Additionally, the controller 45 may also include a communications module 48 to facilitate communications between the controller 45 and the various components of the mold assembly 40. Further, the communications module 48 may include a sensor interface 49 (e.g., one or more analog-to-digital converters) to permit signals transmitted from one or more sensors 44 to be converted into signals that can be understood and processed by the processors 46. It should be appreciated that the sensors 44 may be communicatively coupled to the communications module 48 using any suitable means. For example, as shown in FIG. 6, the sensors 44 may be coupled to the sensor interface 49 via a wired connection. However, in other embodiments, the sensors 44 may be coupled to the sensor interface 49 via a wireless connection, such as by using any suitable wireless communications protocol known in the art. As such, the processor 46 may be configured to receive one or more signals from the sensors 44.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor(s) 46 is also configured to compute advanced control algorithms and communicate to a variety of Ethernet or serial-based protocols (Modbus, OPC, CAN, etc.). Additionally, the memory device(s) 47 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 47 may generally be configured to store suitable computer-readable instructions that, when implemented by the processor(s) 46, configure the controller 45 to perform the various functions as described herein.

Referring back to FIG. 4, as shown at 112, the cure cycles further includes supplying heat to each of the mold zones 42. For example, as shown in FIG. 5, each of the mold zones 42 may be associated with one or more heating/cooling elements 52. Thus, in certain embodiments, the controller 45 may control the heating/cooling elements 52 of each mold zone 42. More specifically, the heating/cooling elements 52 may include coils embedded in each mold zone 42 (for heating or cooling as shown), heated or cooling fluids (such as air or water), and/or a temperature-controlled blanket.

Referring still to FIG, 4, as shown at 114, the cure cycle also includes continuously receiving, via the controller 45, signals from the sensors from one or more of the mold zones. For example, in certain embodiments, the controller 45 may receive signals from each mold zone 42 or a group of the mold zones 42. As shown at 116, the cure cycle also includes dynamically controlling the supplied heat to each mold zone based on the received signals and the composite material schedule of each mold zone until the cure cycle is complete. The controller 45 is configured to generate a unique temperature profile for each of the mold zones based on the composite material schedule and controlling the supplied heat to each mold zone based on the unique temperature profile provided thereto until the cure cycle is complete.

The method 100 further includes continuously optimizing the cure cycle during implementation thereof, e.g. via machine learning. The controller 45 is configured to determine initial operating parameters for each of the mold zones 42. To establish the initial operating parameters for each zone 42, the cure cycle is optimized for each zone 42 using computer simulation software. Optimization in this step includes developing algorithms which run the simulation repetitively and adjusts the cure profile for each mold zone 42 (within limits) to achieve the shortest overall cure cycle. In certain embodiments, the initial operating parameters may include an initial set point, a ramp rate, a cure temperature, a final cure time, or another other parameter relating to the curing process.

Thus, once the initial operating parameters are determined, the controller 45 is configured to utilize parameters in the cure cycle. After a cure cycle is implemented, in certain embodiments, the method 100 may also include comparing the actual cure cycle against the computer simulation of the cure cycle and optimizing the actual cure cycle based on differences between the two. For example, in one embodiment, the method 100 may include adjusting various set points, ramp rates, cure temperatures, and/or the final cure time for each of the mold zones 42. In another embodiment, the controller 45 may be programmed to perform a simulation of the balance of the cure cycle, while the cure cycle is underway to predict and guide the remainder of cycle. As such, the controller 45 can use the results for further optimization. In another embodiment, the method 100 may include optimizing the cure cycle based on one or more historical cure cycles. In particular embodiments, the method 100 may include generating operating data during the cure cycle, storing the operating data, e.g. in the memory device(s) 47, and utilizing the stored operating data to optimize subsequent cure cycles.

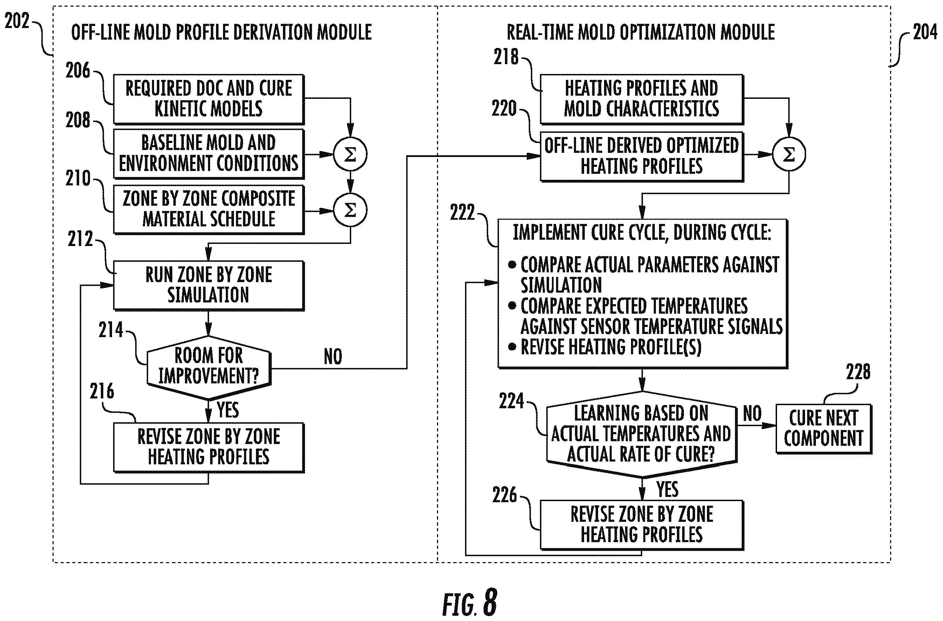

Referring now to FIG. 8, a flow diagram of another embodiment of a method 200 for manufacturing a rotor blade component of a wind turbine 100 according to the present disclosure, which is not encompassed by the wording of the claims but useful for understanding the invention, is illustrated. More specifically, as shown, the method 200 includes an offline mold profile derivation module 202 and a real-time mold optimization module 204. The offline mold profile derivation module 202 inputs the required DOC and cure kinetic models 206, the baseline mold and environmental conditions 208, and the zone-by-zone laminate schedule 210 into a zone-by-zone simulation 212. If there is room for improvement (214), then the method 200 revises the zone-by-zone heating profiles 216 and continues to run the simulation (212). If there is no room for improvement (214), the real-time mold optimization module 204 combines offline derived optimized heating profiles 220 with the heating profiles and the mold characteristics 218. At 222, the real-time mold optimization module 204 runs the cure cycle. More specifically, during the cycle, the method 200 includes comparing actual parameters against simulation parameters, comparing expected temperatures against sensor signals, and revising the heating profile(s) accordingly. At 224, the method 200 includes machine learning based on actual signals. If no learning takes place, the method 200 includes curing the next part (228). In contrast, if learning takes place, the method 200 includes revising the zone-by-zone heating profiles (226) and using the revised cure cycle for the next part.

Thus, the methods of the present disclosure utilize machine learning algorithms in conjunctions with cure kinetic simulation and sensor feedback to enable each mold zone 42 to have an individual temperature or heating profile that can be optimized either before starting a cure cycle, concurrently while a cure cycle is being implemented, or via multiple cure history. In other words, as mentioned, optimization can be done initially by running simulation of the cure cycle for each zone 42 (e.g. via PAM/RTM software offered by ESI Group) with allowable mold and exothermic temperatures. As such, the derived DOC and temperature profiles can be used to gage actual cure performance during a cure cycle and concurrently adjust the mold parameters. Further, information gained during each cure cycle can be used better understand and further optimize the cure cycles.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for manufacturing a rotor blade component of a wind turbine (10), the method comprising:
providing a mold body (41) that is divided into a plurality of mold zones (42), each of the mold zones (42) having at least one sensor (44) associated therewith for sensing a temperature or degree-of-cure thereof;
providing a composite material schedule (50) for each of the mold zones (42);
placing composite material onto the mold body (41) according to the composite material schedule (50);
supplying a resin material to each mold zone (42) of the mold body (41);
implementing a cure cycle for the rotor blade component, the cure cycle comprising:
supplying heat to each of the mold zones (42);
continuously receiving, via a controller (45), signals from the sensors (44) from one or more of the mold zones (42); and,
dynamically controlling the supplied heat to each mold zone (42) based on the received signals and the composite material schedule (50) of each mold zone (42) until the cure cycle is complete, wherein the dynamically controlling comprises generating a unique temperature profile for each of the mold zones (42) based on the composite material schedule (50), and controlling the supplied heat to each mold zone (42) based on the unique temperature profile provided thereto until the cure cycle is complete;
wherein the method further comprises continuously optimizing the cure cycle during implementing via machine learning, wherein the continuously optimizing comprises
determining initial operating parameters for each of the mold zones (42),
optimizing the initial operating parameters via computer simulation, and
sending the optimized initial operating parameters to the controller (45) to utilize in the cure cycle; and
wherein the method further comprises
developing one or more algorithms that run the computer simulation repetitively, and
adjusting the temperatures profile for each mold zones to achieve a shortest overall cure cycle.

2. The method of claim 1, wherein the initial operating parameters comprises at least one of an initial set point, a ramp rate, a cure temperature, or a final cure time.

3. The method of claim 1 or 2, further comprising:
comparing the cure cycle against the computer simulation; and,
optimizing the cure cycle based on differences between the cure cycle and the computer simulation.

4. The method of claim 3, wherein optimizing the cure cycle based on differences between the cure cycle and the computer simulation further comprises adjusting at least one of an initial set point, an initial ramp rate, an initial cure temperature, or a final cure time for each of the mold zones (42).

5. The method of any of the preceding claims, further comprising optimizing the cure cycle based on one or more historical cure cycles.

6. The method of any of the preceding claims, further comprising:
generating operating data during the cure cycle;
storing the operating data; and,
utilizing the stored operating data to optimize subsequent cure cycles.

7. The method of any of the preceding claims, wherein continuously receiving, via the controller (45), signals from the sensors (44) further comprises receiving at least one of temperature signals or degree-of-cure signals from one or more of the mold zones (42) or a group of the mold zones (42).

8. The method of any of the preceding claims, wherein dynamically controlling the supplied heat to each mold zone (42) based on the received signals and the composite material schedule (50) of each mold zone (42) until the cure cycle is complete further comprises:
maintaining a uniform temperature profile along a length of the mold body (41).

## Patentansprüche

1. Verfahren zur Herstellung einer Rotorblattkomponente einer Windkraftanlage (10), wobei das Verfahren umfasst:
Bereitstellen eines Formkörpers (41), der in eine Vielzahl von Formzonen (42) unterteilt ist, wobei jede der Formzonen (42) mindestens einen ihr zugeordneten Sensor (44) zum Erfassen einer Temperatur oder eines Aushärtungsgrades derselben aufweist;
Bereitstellen eines Verbundmaterialplans (50) für jede der Formzonen (42);
Aufbringen von Verbundmaterial auf den Formkörper (41) gemäß dem Verbundmaterialplan (50);
Zuführen eines Harzmaterials zu jeder Formzone (42) des Formkörpers (41);
Durchführen eines Aushärtungszyklus für die Rotorblattkomponente, wobei der Aushärtungszyklus umfasst:
Wärmezuführen zu jeder der Formzonen (42);
kontinuierliches Empfangen, mittels einer Steuerung (45), von Signalen von den Sensoren (44) aus einer oder mehreren der Formzonen (42); und,
dynamisches Steuern der jeder Formzone (42) zugeführten Wärme basierend auf den empfangenen Signalen und dem Verbundmaterialplan (50) jeder Formzone (42), bis der Aushärtungszyklus abgeschlossen ist,
wobei das dynamische Steuern das Erzeugen eines eindeutigen Temperaturprofils für jede der Formzonen (42) basierend auf dem Verbundmaterialplan (50) aufweist, und das Steuern der jeder Formzone (42) zugeführten Wärme basierend auf dem ihr bereitgestellten einzigartigen Temperaturprofil, bis der Aushärtungszyklus abgeschlossen ist;
wobei das Verfahren ferner das kontinuierliche Optimieren des Aushärtungszyklus während der Durchführung mittels maschinellen Lernens umfasst, wobei das kontinuierliche Optimieren umfasst
Bestimmen anfänglicher Betriebsparameter für jede der Formzonen (42),
Optimieren der anfänglichen Betriebsparameter mittels Computersimulation, und
Senden der optimierten anfänglichen Betriebsparameter an die Steuerung (45), um sie im Aushärtungszyklus zu verwenden; und
wobei das Verfahren ferner umfasst
Entwickeln eines oder mehrerer Algorithmen, die die Computersimulation wiederholt ausführen, und
das Anpassen des Temperaturprofils für jede Formzone, um einen kürzesten Gesamtaushärtungszyklus zu erreichen.

2. Verfahren nach Anspruch 1, wobei die anfänglichen Betriebsparameter mindestens eines von einem anfänglichen Sollwert, einer Rampenrate, einer Aushärtungstemperatur oder einer Endaushärtungszeit.

3. Das Verfahren nach Anspruch 1 oder 2, ferner umfassend:
Vergleichen des Aushärtungszyklus mit der Computersimulation; und,
Optimieren des Aushärtungszyklus basierend auf den Unterschieden zwischen dem Aushärtungszyklus und der Computersimulation.

4. Verfahren nach Anspruch 3, wobei das Optimieren des Aushärtungszyklus auf der Grundlage von Unterschieden zwischen dem Aushärtungszyklus und der Computersimulation ferner das Einstellen von mindestens einem von einem anfänglichen Sollwert, einer anfänglichen Rampenrate, einer anfänglichen Aushärtungstemperatur oder einer endgültigen Aushärtungszeit für jede der Formzonen (42) aufweist.

5. Verfahren nach einem der vorhergehenden Ansprüche ferner umfassend, Optimieren des Aushärtungszyklus auf der Grundlage eines oder mehrerer historischer Aushärtungszyklen.

6. Verfahren nach einem der vorhergehenden Ansprüche, das ferner umfasst:
Erzeugen von Betriebsdaten während des Aushärtungszyklus;
Speichern der Betriebsdaten; und,
Verwenden der gespeicherten Betriebsdaten zur Optimierung nachfolgender Aushärtungszyklen.

7. Verfahren nach einem der vorhergehenden Ansprüche, wobei das kontinuierliche Empfangen von Signalen von den Sensoren (44) mittels der Steuerung (45) ferner das Empfangen von Temperatursignalen oder Aushärtungsgradsignalen von einer oder mehreren der Formzonen (42) oder einer Gruppe der Formzonen (42) umfasst.

8. Verfahren nach einem der vorhergehenden Ansprüche, wobei die dynamische Steuerung der Wärmezufuhr zu jeder Formzone (42) basierend auf den empfangenen Signalen und dem Verbundmaterialplan (50) jeder Formzone (42), bis der Aushärtungszyklus abgeschlossen ist, ferner umfasst:
Aufrechterhaltung eines gleichmäßigen Temperaturprofils entlang einer Länge des Formkörpers (41).

## Revendications

1. Procédé pour fabriquer un composant de pale de rotor d'une turbine éolienne (10), le procédé comprenant :
la fourniture d'un corps de moule (41) qui est divisé en une pluralité de zones de moule (42), chacune des zones de moule (42) ayant au moins un capteur (44) associé à celle-ci pour détecter une température ou un degré de durcissement de celle-ci ;
la fourniture d'un plan de matériau composite (50) pour chacune des zones de moule (42) ;
le placement d'un matériau composite sur le corps de moule (41) selon le plan de matériau composite (50) ;
l'alimentation d'un matériau de résine à chaque zone de moule (42) du corps de moule (41) ;
la mise en œuvre d'un cycle de durcissement pour le composant de pale de rotor, le cycle de durcissement comprenant :
l'alimentation de chaleur à chacune des zones de moule (42) ;
la réception de manière continue, par l'intermédiaire d'un dispositif de commande (45), de signaux à partir des capteurs (44) à partir d'une ou plusieurs des zones de moule (42) ; et,
la commande de manière dynamique de la chaleur alimentée à chaque zone de moule (42) en fonction des signaux reçus et du plan de matériau composite (50) de chaque zone de moule (42) jusqu'à ce que le cycle de durcissement soit terminé, dans lequel la commande de manière dynamique comprend la génération d'un profil de température unique pour chacune des zones de moule (42) en fonction du plan de matériau composite (50), et la commande de la chaleur alimentée à chaque zone de moule (42) en fonction du profil de température unique fourni à celle-ci jusqu'à ce que le cycle de durcissement soit terminé ;
dans lequel le procédé comprend en outre l'optimisation de manière continue du cycle de durcissement pendant la mise en œuvre par l'intermédiaire d'un apprentissage automatique, dans lequel l'optimisation de manière continue comprend
la détermination de paramètres de fonctionnement initiaux pour chacune des zones de moule (42),
l'optimisation des paramètres de fonctionnement initiaux par l'intermédiaire d'une simulation informatique, et
l'envoi des paramètres de fonctionnement initiaux optimisés au dispositif de commande (45) à utiliser dans le cycle de durcissement ; et
dans lequel le procédé comprend en outre
le développement d'un ou plusieurs algorithmes qui exécutent la simulation informatique de manière répétitive, et
l'ajustement du profil de température pour chaque zones de moule pour obtenir un cycle de durcissement global le plus court.

2. Procédé selon la revendication 1, dans lequel les paramètres de fonctionnement initiaux comprennent au moins l'un d'un point de réglage initial, d'une vitesse de rampe, d'une température de durcissement, ou d'un temps de durcissement final.

3. Procédé selon la revendication 1 ou 2, comprenant en outre :
la comparaison du cycle de durcissement avec la simulation informatique ; et,
l'optimisation du cycle de durcissement en fonction de différences entre le cycle de durcissement et la simulation informatique.

4. Procédé selon la revendication 3, dans lequel l'optimisation du cycle de durcissement en fonction de différences entre le cycle de durcissement et la simulation informatique comprend en outre l'ajustement d'au moins l'un d'un point de réglage initial, d'une vitesse de rampe, d'une température de durcissement, ou d'un temps de durcissement final pour chacune des zones de moule (42).

5. Procédé selon l'une quelconque des revendications précédentes, comprenant en outre l'optimisation du cycle de durcissement en fonction d'un ou plusieurs cycles de durcissement historiques.

6. Procédé selon l'une quelconque des revendications précédentes, comprenant en outre :
la génération de données de fonctionnement pendant le cycle de durcissement ;
le stockage des données de fonctionnement ; et,
l'utilisation des données de fonctionnement stockées pour optimiser les cycles de durcissement ultérieurs.

7. Procédé selon l'une quelconque des revendications précédentes, dans lequel la réception de manière continue, par l'intermédiaire du dispositif de commande (45), de signaux à partir des capteurs (44) comprend en outre la réception d'au moins l'un des signaux de température ou des signaux de degré de durcissement à partir d'une ou plusieurs des zones de moule (42) ou d'un groupe des zones de moule (42).

8. Procédé selon l'une quelconque des revendications précédentes, dans lequel la commande de manière dynamique de la chaleur alimentée à chaque zone de moule (42) en fonction des signaux reçus et du plan de matériau composite (50) de chaque zone de moule (42) jusqu'à ce que le cycle de durcissement soit terminé comprend :
le maintien d'un profil de température uniforme le long d'une longueur du corps de moule (41).
